# EUROPEAN PATENT APPLICATION

(11) **EP 2 687 410 A1**
(43) Date of publication of application: **22.01.2014**
(21) Application number: 11861227.4
(22) Date of filing: 16.03.2011
(51) Int. Cl.: B60R 21/00, G05D 1/00

(54) **VEHICLE REMOTE OPERATION DEVICE**

(71) Applicant: Toyota Jidosha Kabushiki Kaisha, Toyota-shi, Aichi 471-8571 (JP)
(72) Inventor: OKAMURA Ryuji, Toyota-shi Aichi 471-8571 (JP); SOBUE Yuka, Toyota-shi Aichi 471-8571 (JP); HIEI Yu, Toyota-shi Aichi 471-8571 (JP); MORIMOTO, Chika, Toyota-shi Aichi 471-8571 (JP)
(74) Representative: Smith, Samuel Leonard
(86) International application number: PCT/JP2011/056287
(87) International publication number: WO 2012/124085

(57) **Abstract**

In a vehicle remote operation device enabling parking-in and parking-out by a remote operation, the present invention provides the vehicle remote operation device which may correspond to an ambient condition change. When an automatic steering unit 15 automatically performs parking-in and parking-out by receiving an instruction from the transmitter 50, obstacle conditions around a vehicle (particularly, around a door) obtained by the surrounding object sensor 21 are detected, and it is determined whether a sufficient space is ensured for a passenger's getting on/off through a door to automatically move a vehicle to a place where getting on/off is easy if necessary.

## Description

### Technical Field

The present invention relates to an apparatus remotely operating a vehicle.

### Background Art

A driving support device is known which supports a parking operation by setting an appropriate route when parking. A technology disclosed in Patent Literature 1 is one of the driving support devices, which stores a route when parking-in or parking-out and enables automatic travel along the route. When performing the automatic travel, a driver does not need to get on a vehicle. Accordingly, an advantage is disclosed that it is possible to separate between a position of a passenger's getting on/off and a parking position, and to park even at a place in which a space for the passenger to comfortably get on/off the vehicle cannot be ensured.

### Citation List

### Patent Literature

[Patent Literature 1] JP 2008-536734A

### Summary of Invention

### Technical Problem

In the technology, in order to perform traveling along a previously-traveled route, driver's parking-in and parking-out operations are essential. If there is a change in ambient conditions, for example, an obstacle around a vehicle, positions of other vehicles, and the like from the set state at the time of storing the route, there is a disadvantage that an appropriate support cannot be provided.

The present invention aims to provide a vehicle remote operation device which enables parking-in and parking-out using a remote operation to correspond to a change in ambient conditions.

### Solution to Problem

In order to solve the above-described problem, in a vehicle remote operation device automatically moving a vehicle using a remote operation, the vehicle remote operation device according to the present invention includes (1) detecting means for detecting obstacle conditions around the vehicle, (2) determination means for determining a degree of difficulty in passenger's getting on/off the vehicle based on the obstacle conditions detected by the detecting means, and (3) automatic steering means for automatically moving the vehicle based on the degree of difficulty determined by the determination means.

When it is determined that getting on/off through a designated vehicle door is not easy by the determination means, the vehicle may be automatically moved to a place where getting on/off is easy. In particular, when it is determined that the degree of difficulty in getting on/off through the designated vehicle door is not easy at all between a current position and a designated position, the vehicle may be automatically moved to a place where getting on/off is easiest therebetween.

The determination means may determine the degree of difficulty in getting on/off based on a distance between the designated vehicle door in the vehicle and an obstacle facing the designated vehicle door.

### Advantageous Effects of Invention

According to the present invention, by detecting obstacle conditions (position, distance to vehicles, and the like) around the vehicle and determining a difficulty in passenger's getting on/off through a vehicle door based on the detected obstacle conditions, even in a case where the conditions around the vehicle are changed, it is possible to determine whether or not a space can be ensured for getting on/off according to the change.

Based on the determined degree of difficulty, by automatically moving a vehicle, a operator can appropriately move the vehicle to a place where a space for passenger's getting on/off can be ensured using a remote operation, and convenience can be improved since passenger's getting on/off is not performed at a place where passenger's getting on/off is not easy.

By moving the vehicle to the place where passenger's getting on/off is easiest in a space to a predetermined place in order to ensure convenient passenger's getting on/off, a vehicle or a passenger does not have to move more than needed, and thereby reliability as well as convenience is improved.

### Brief Description of Drawings

Fig. 1 is a block diagram illustrating a configuration of a vehicle remote operation device according to the present invention;
Fig. 2 is a flowchart illustrating a remote operation of the device shown in Fig. 1;
Fig. 3 is a diagram illustrating a vehicle movement when performing a remote operation;
Fig. 4 is a diagram illustrating a vehicle before parking-out using remote operation and ambient conditions;
Fig. 5 is a diagram illustrating the vehicle after parking-out using the remote operation and the ambient conditions; and
Fig. 6 is a flowchart illustrating another remote operation of the device shown in Fig. 1.

### Description of Embodiments

Preferred embodiments of the invention will be described in detail with reference to the accompanying drawings. For the purpose of easy understanding, the same reference numerals are given to the same configuring elements in each drawing as much as possible, and the repeated description will be omitted.

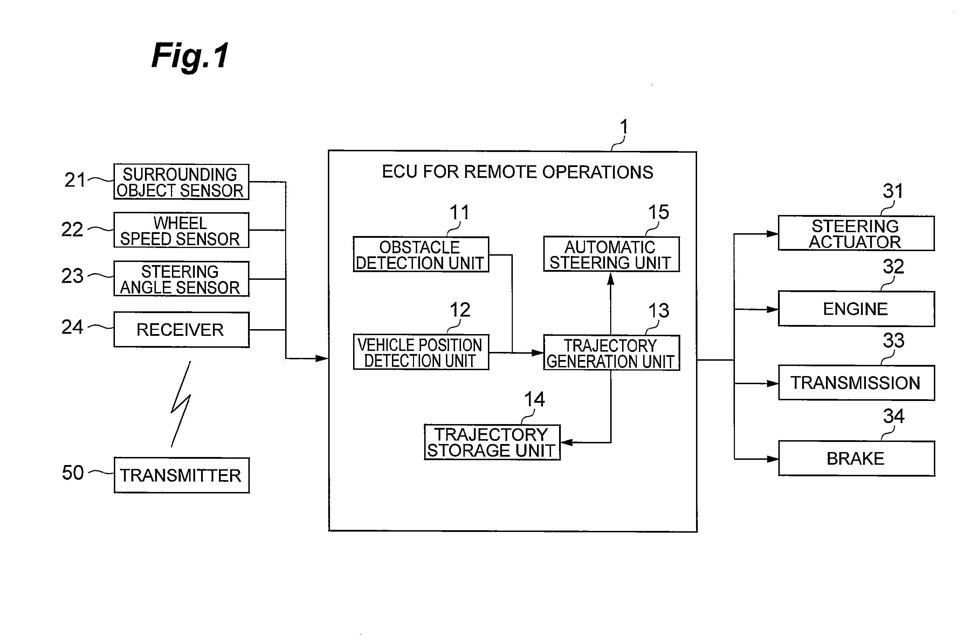

Fig. 1 illustrates a configuration of a vehicle remote operation device according to the present invention. The vehicle remote operation device is configured with an Electric Control Unit (ECU) 1 for remote operations being a main component, which is a control unit. The ECU 1 for remote operations is configured to include a CPU, a ROM, a RAM, and the like. An obstacle detection unit 11, a vehicle position detection unit 12, a trajectory generation unit 13, a trajectory storage unit 14, and an automatic steering unit 15 are provided therein. Each unit inside the ECU 1 for remote operations may be separate hardware. In this case, a portion of the hardware may be shared. When each unit is not separate hardware or a portion is shared, each unit may be separate software and a portion of the software may be shared. Furthermore, a plurality of functions may be realized inside identical software.

In the ECU 1 for remote operations, an output of an surrounding object sensor 21 detecting a position of an surrounding obstacle, a wheel speed sensor 22 detecting a rotation of a wheel, and a steering angle sensor 23 detecting the amount of steering are input, and the amount of state of each vehicle is read. In addition, an output signal of a receiver 24 is input into the ECU 1 for remote operations. Furthermore, the receiver 24 has a function of receiving an instruction signal of the remote operation by communicating with a transmitter 50 each other which a passenger such as a driver may take outside of the vehicle. The transmitter 50 may be integrated with, for example, an ignition key of the vehicle. As the surrounding object sensor 21, an ultrasonic sensor, a laser sensor, an infrared sensor, and the like may be used. The surrounding object sensor 21 is disposed at a plurality of places in the vehicle including at least the vicinity of a driver's side door. For example, in a case of an opening-outward-type driver's seat door, a sensor may be disposed at the front and the back of the door.

In addition, the ECU 1 for remote operations controls a steering actuator 31 performing steering, an engine 32 driving the vehicle, a transmission 33, and a brake 34 performing braking, respectively. As the steering actuator 31, an actuator of an electric power steering apparatus may be used, for example.

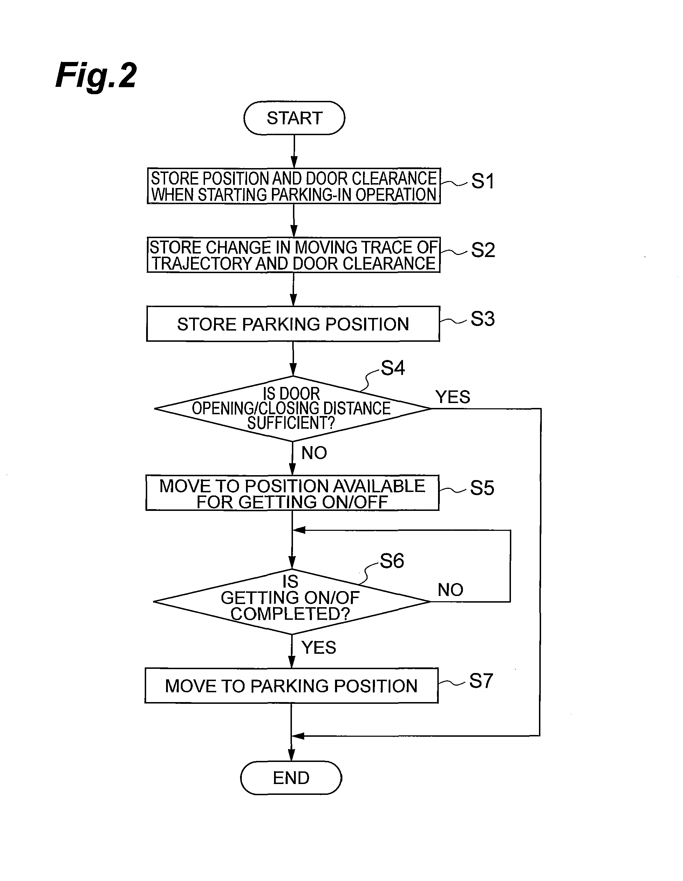

The followings describe a case where parking-in and parking-out operation are performed, as an example, so as to facilitate passenger's getting on/off through the driver's side door. First, an operation when parking-in and parking-out operation by the vehicle remote operation device is described referring to a flowchart in Fig. 2. The process may start when the process is set to a parking state by a switch not illustrated or when a remote operation is on. Alternatively, the process may be operated at the point of time when a state of the transmission is set to a state of moving backward after the driver stops the vehicle.

In a first step S1, a vehicle position when starting parking-in operation, which is detected by the vehicle position detection unit 12, and door clearance detected by the obstacle detection unit 11 are stored. The position when starting parking-in operation may be based on a position of a host vehicle determined by a navigation apparatus like Global Positioning System (GPS) which is not illustrated. Alternatively, a change in a steering angle may be stored along a travel distance from a position at starting parking-in operation, which is set as a starting point. The obstacle detection unit 11 detects a distance to an obstacle around the vehicle detected by the surrounding object sensor 21, a position relation, and obstacle conditions around the vehicle based on the change, and thereby determining the door clearance.

As a parameter of the door clearance, for example, it is possible to use a distance between the driver's side door and an obstacle facing this door (that is, an obstacle in an area interfering with the door opening/closing operation) or area of region using getting on/off surrounding the driver's side door as getting on/off space through this door, and a shortest distance between the obstacle and the vehicle body in a predetermined range in a length direction of the vehicle body, an available degree of opening of this door, and the like. Besides, a case of determining whether to open/close the door is also included. For example, in a case where a door openable/closeable distance or an openable/closable opening degree is compared with a reference threshold value, and is greater than the threshold value so that the door can be sufficiently opened and closed, the opening/closing can be determined to be easy, and in a case where this is smaller than the threshold value, the opening/closing may be determined to be difficult.

Thereafter, a moving trace of trajectory during traveling and a change in door clearance are detected and stored (step S2). The detection of the moving trace of trajectory is performed by the vehicle position detection unit 12 and the detection of the change in the room for door is performed by the obstacle detection unit 11 in the same manner as in step S1. The trace of trajectory is stored in the trajectory storage unit 14 in association with the change in the door clearance. By performing this until reaching the parking position, the parking position detected by the vehicle position detection unit 12 is stored (step S3).

A parking operation hereto may be performed only by a driver's control. However, parking operation may be performed by a parking guidance system or an automatic steering so as to calculate an appropriate parking-in route and to perform movement along the route.

When reaching the parking position, based on door clearance at that moment, it is determined whether a distance for door opening/closing is sufficient, that is, whether a space for driver's getting on/off is sufficiently ensured or not (step S4). If the door clearance is sufficient, a driver's getting on/off through the door is easy, and if not sufficient, the driver's getting on/off is difficult. Accordingly, the door clearance functions as an index indicating a degree of difficulty of the driver's getting on/off. If the space for getting on/off is sufficiently ensured, a driver's getting on/off at the parking position is possible, and thereby the process is completed considering this as a parking completion and the subsequent processes are skipped. On the other hand, if it is determined that the space for driver's getting on/off is not sufficiently ensured and this interferes with the driver's getting on/off at the parking position, the process proceeds to step S5.

In step S5, a process of moving to a position available for driver's getting on/off is performed. Here, based on a trace of trajectory and a change in the door clearance while parking-in operation which are stored in the trajectory storage unit 14, the space for driver's getting on/off is ensured between the position at starting parking-in operation and a current position, a point which is the closest to the parking position is searched for, and the trace of trajectory from the parking position is generated considering the point as a destination by the trajectory generation unit 13. Here, if it is determined that, even if the vehicle returns to the position at starting parking-in operation, the space for driver's getting on/off is not sufficient to have a predetermined degree of clearance set in advance or higher, a position where a largest space for getting on/off may be ensured between the position at starting parking-in operation and the parking position (for example, a position which allows the driver's side door to be opened as much as possible) is considered as a destination, and the trace of trajectory from the parking position is generated. The trace of trajectory, for example, is set as a change in a steering angle with respect to a travel distance.

The automatic steering unit 15 controls a steering angle by a steering actuator 31, and controls vehicle speed by operating the engine 32, the transmission 33, and the brake 34, thereby performing traveling according to the generated trace of trajectory and moving the vehicle to the set destination.

After reaching the destination, the process waits for completion of a passenger's getting on/off (step S6). Determination of completion in the getting on/off may be performed by a user's transmitting an instruction to complete getting on/off to the receiver 24 of the vehicle using the transmitter 50 and notifying the instruction to the automatic steering unit 15. This notification may be a notification and the like urging a continuous processing of procedure in addition to a notification of completion of getting on/off. When the process is determined to be in the middle of getting on/off by detecting an opening and closing state of a door and a state of seat-belt, a state of seating, presence of people inside the vehicle, and the like, a vehicle stop state may be retained in which a vehicle is continuously stopped.

When the driver's getting on/off is determined to be completed, the process proceeds to step S7, a route retracing a route from the parking position previously set to a current position is generated, and an automatic steering is performed along the route. Accordingly, the vehicle automatically moves to the parking position.

Here, a destination where getting on/off is easy is set in a space to the position at starting parking-in operation. However, when there is no destination satisfying a condition that getting on/off is easy with the predetermined degree of clearance or higher even tracing back to the position at starting parking-in operation, a route to the position at starting parking-in operation may be set to a route further extended, and the vehicle may be stopped at a point where getting on/off reaches the predetermined degree of clearance or higher.

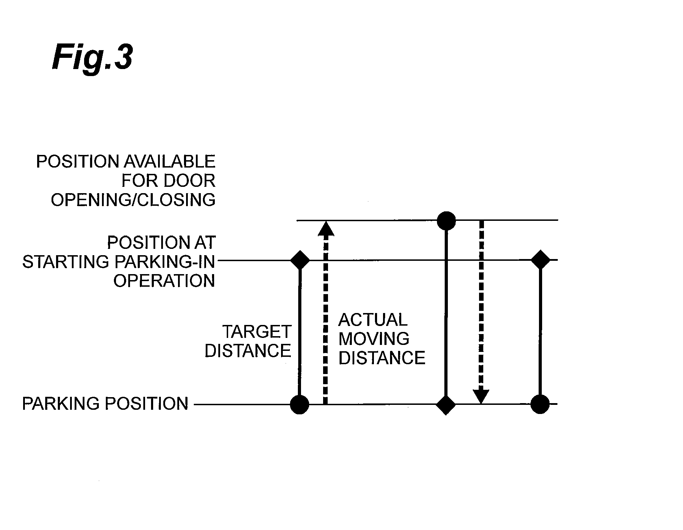

Fig. 3 describes an example of the trace of trajectory when parking-in operation in a case of moving straight ahead. Parking-in operation is completed by moving the vehicle once backward from the position at starting parking-in operation to the parking position using a driver's operation, moving the vehicle forward to a position where a door may be opened/closed using the ECU 1 for remote operations, and, after the driver's getting off the vehicle there, moving the vehicle backward again to the parking position.

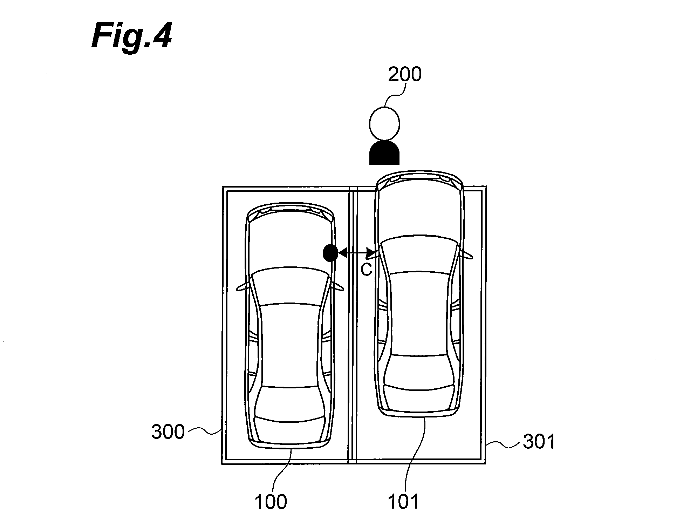

Next, an operation when parking-out operation will be described referring to Figs. 4 to 6. Here, as illustrated in Fig. 4, a case is considered where a vehicle 100 which a driver 200 intends to get on is parked at a parking position 300 and another vehicle 101 is parked at an adjacent parking position 301. Here, the vehicle 100 has a driver seat at its right side.

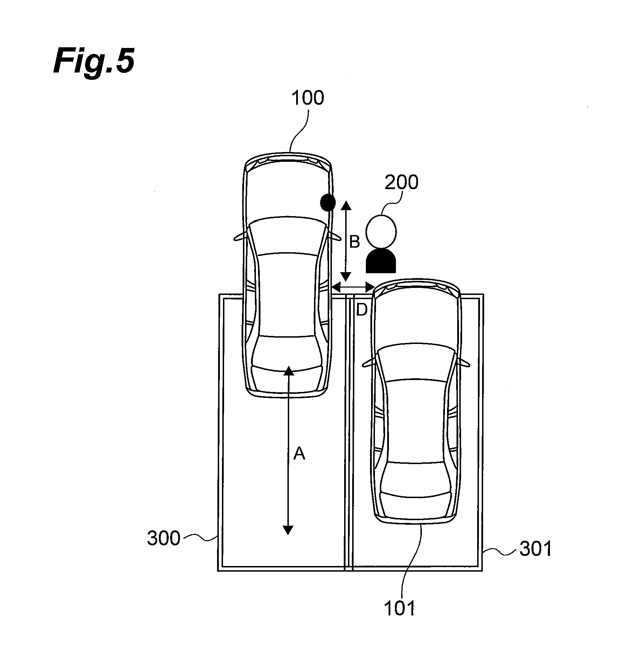

Since a lateral distance C between the vehicle 100 and the vehicle 101 is narrow and it is not possible to sufficiently open a driver's side door of the vehicle 100, it is estimated that it is difficult for the driver 200 to get on the vehicle 100 in a current vehicle positional relation. In this case, as shown in Fig. 5, if the vehicle 100 is moved forward as much as a distance A, it is possible to sufficiently open the driver's seat side door of the vehicle 100, and to enable the driver 200 to easily get on/off.

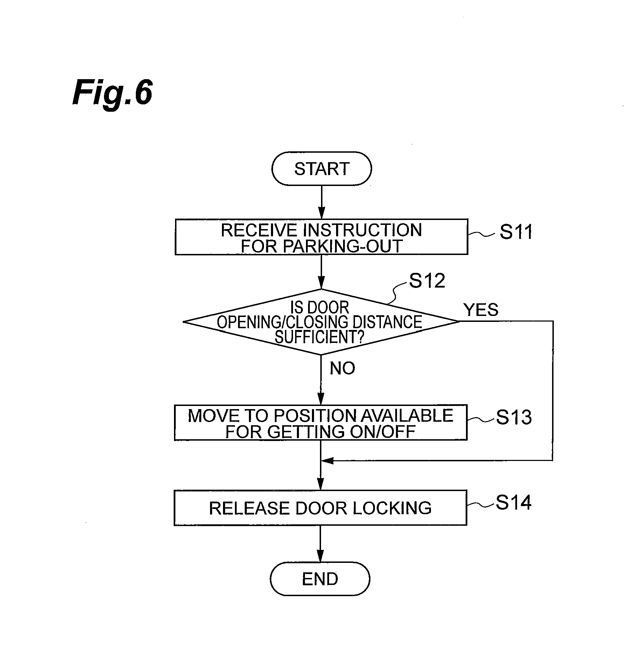

Fig. 6 is a processing flow of the parking-out operation. First, a parking-out instruction which a driver transmits using the transmitter 50 is received by the receiver 24 (step S11). Next, using the obstacle detection unit 11, an obstacle position around the vehicle is detected, and accordingly a degree of door opening/closing clearance is determined (step S12). If it is determined that there is sufficient opening/closing clearance at a current position to enable the driver to easily get on/off the vehicle, the process proceeds to step S 14 and a door lock is released to inform the driver that he/she can get on the vehicle.

On the other hand, at the current position, if it is determined that there is not sufficient clearance for the door opening/closing, the process proceeds to step S 13, and movement to the position available for getting on/off is performed by controlling the steering actuator 31, the engine 32, the transmission 33, and the brake 34 according to an instruction of the automatic steering unit 15.

Determination of whether to reach the position available for getting on/off may be performed by determining the degree of door opening/closing clearance using the same processing as in the step S12 and continuously travelling until it is determined there is sufficient door opening/closing clearance to enable a driver to easily get on/off. For a traveling trace of trajectory formed by the trajectory generation unit 13 at this time, a trace of trajectory when parking-in stored in the trajectory storage unit 14, a trace of reference trajectory set in advance, and a straight trace of trajectory may be used. Based on a detection result of the obstacle detection unit 11, a trace of trajectory which can keep a sufficient distance to an obstacle is applied. After reaching the position available for getting on/off, the process proceeds to step S14 and a door locking is released to inform the driver of availability in getting on the vehicle. Instead of the position available for getting on/off, by setting an initial destination to the vicinity of a current position of a driver obtained from the transmitter 50, the vehicle may be moved to a point where getting on/off is easiest near the current position of the driver.

The above mentioned description describes a case where getting on/off through the driver's seat side door is determined as an example. However, other doors including a cargo door may also be available. In addition, the present invention is not limited to a door opening to an outside, but is appropriately applicable to a door opening upward or a slide door. An operator sends an instruction to the receiver 24 from the transmitter 50, and thereby it is possible to designate an object door.

### Industrial Applicability

The present invention is appropriate to a remote operative vehicle.

### Reference Signs List

1. ECU for remote operations
11. Obstacle detection unit
12. Vehicle position detection unit
13. Trajectory generation unit
14. Trajectory storage unit
15. Automatic steering unit
21. Surrounding object sensor
22. Wheel speed sensor
23. Steering angle sensor
24. Receiver
31. Steering actuator
32. Engine
33. Transmission
34. Brake
50. Transmitter
100 and 101. Vehicles
200. Driver
300 and 301. Parking positions

## Claims

1. A vehicle remote operation device automatically moving a vehicle using a remote operation, comprising:
detecting means for detecting obstacle conditions around the vehicle;
determination means for determining a degree of difficulty in passenger's getting on/off the vehicle based on the obstacle conditions detected by the detecting means; and
automatic steering means for automatically moving the vehicle based on the degree of difficulty determined by the determination means.

2. The vehicle remote operation device according to claim 1, wherein, when it is determined that getting on/off through a designated vehicle door is not easy by the determination means, the vehicle is automatically moved to a place where getting on/off is easy.

3. The vehicle remote operation device according to claim 2, wherein, when it is determined that the degree of difficulty in getting on/off through the designated vehicle door is not easy at all between a current position and a designated position, the vehicle is automatically moved to a place where getting on/off is easiest therebetween.

4. The vehicle remote operation device according to claim 1, wherein the determination means determines the degree of difficulty in getting on/off based on a distance between the designated vehicle door in the vehicle and an obstacle facing the vehicle door.
